# EUROPEAN PATENT APPLICATION

(11) **EP 4 056 045 A1**
(43) Date of publication of application: **14.09.2022**
(21) Application number: 21168167.1
(22) Date of filing: 13.04.2021
(51) Int. Cl.: A23J 1/16, A23K 10/38

(54) **METHOD AND SYSTEM FOR PRODUCING A HIGH PROTEIN MEAL FROM A WHOLE STILLAGE BYPRODUCT AND SYSTEM THEREFOR**

(30) Priority: 10.03.2021 US 202117197520
(71) Applicant: Fluid Quip Technologies, LLC, Springfield, OH 45506 (US)
(72) Inventor: JAKEL, Neal, Cedar Rapids IA, 52403 (US); FRANKO, Michael, Denver CO, 80210 (US); CANNON, Donald M., Mount Vernon IA, 52314 (US)
(74) Representative: Wallinger Ricker Schlotter Tostmann

(57) **Abstract**

A method and system for producing a high protein meal from a whole stillage byproduct produced in a grain dry-milling process for making ethanol, with optional back end milling options, is disclosed. In one embodiment, a method for producing a high protein meal from a whole stillage byproduct includes separating the whole stillage byproduct into an insoluble solids portion and a thin stillage/centrate portion, wherein at least one milling step can be applied to one or both of the insoluble solids portion and the whole stillage portion. Next, the centrate portion may be separated into a protein portion and a water-soluble solids portion. And then the protein portion can be dewatered and/or dried to define a high protein meal having at least 40 wt % protein on a dry basis.

## Description

### Technical Field

The present invention relates generally to grain dry-milling, and more specifically, to a method and system for producing a high protein meal from a whole stillage byproduct produced in a grain (e.g., a corn) dry-milling process for making a biochemical, such as ethanol.

### Background

Wet mill corn processing plants convert corn grain into several different natural co-products, such as germ (for oil extraction), gluten feed (high fiber animal feed), gluten meal (high protein animal feed), and starch-based products, including ethanol, high fructose corn syrup, or food and industrial starch. Constructing wet-milling plants is complex and capital-intensive, and operating them is operationally complex and energy intensive.

Dry-mill ethanol plants alternatively have a much lower capital cost to build and lower operating cost to operate compared to a wet mill process. Dry milling plants generally convert corn into only three products, i.e., ethanol, distillers corn oil, and distiller's grains with solubles. A typical corn dry milling process consists of four major steps: grain handling and milling, liquefaction and saccharification, fermentation and distillation, and co-product recovery. Grain handling and milling is the step in which the corn is brought into the plant and ground to promote better conversion of starch to glucose. Liquefaction is the step of converting solids, such as starch, to a flowable liquid producing oligosaccharides and saccharification is where the oligosaccharides are converted into single glucose molecules. Fermentation is the process of yeast or bacteria, or as clostridia, for example, converting glucose into a biofuel or a biochemical, such as ethanol. Distillation is the process of removing the biofuel or biochemical, such as ethanol, from the fermentation product. Co-product recovery is the step in which the corn by-products are de-watered and made ready for market. There are many known chemical and biological conversion processes known in the art that utilize yeast, bacteria, or the like to convert glucose to other biofuels and biochemical components like ethanol, for example.

The recovery of alcohol, e.g., butanol, ethanol (a natural co-product), etc., and other similar compounds, generally begins with the beer (spent fermentation broth) being sent to a distillation system. With distillation, ethanol is typically separated from the rest of the beer through a set of stepwise vaporizations and condensations. The beer less the alcohol extracted through distillation is known as whole stillage, which contains a slurry of the spent grains including corn protein, fiber, oil, minerals, sugars, and fermentation agent. This byproduct is too diluted to be of much value at this point and is further processed to provide the distiller's grains with solubles.

In typical processing, when the whole stillage leaves the distillation column, it is generally subjected at the back end of the process to a decanter centrifuge to separate insoluble solids or "wet cake", which includes mostly fiber, from the liquid or "thin stillage", which includes, e.g., protein, fine fiber, oil, and amino acids. After separation, the thin stillage moves to evaporators to boil away moisture, leaving a thick syrup that contains the soluble (dissolved) solids. The concentrated syrup is typically mixed with the wet cake, and the mixture may be sold to beef and dairy feedlots as distillers wet grain with solubles (DWGS). Alternatively, the wet cake and concentrated syrup mixture may be dried in a drying process and sold as distillers dried grain with solubles (DDGS). The resulting DDGS generally has a crude protein content of about 29% and is a useful feed for cattle and other ruminants due to its protein and fiber content.

While DDGS and DWGS provide a critical secondary revenue stream that offsets a portion of the overall ethanol production cost, it would be beneficial to provide a method and system where a high protein product, such as from corn, can be obtained from the whole stillage to be sold at a higher cost per ton than DDGS or DWGS.

### Summary of the Invention

The present invention is directed to a method and system for producing a high protein meal from a whole stillage byproduct produced in a grain dry-milling process for making a biochemical, such as ethanol.

In one embodiment, a method for producing a high protein meal from a whole stillage byproduct produced from a biochemical process is disclosed that includes milling at least a portion of a whole stillage byproduct, separating the whole stillage byproduct, which includes the milled portion, into an insoluble solids portion and a liquid portion, which includes protein, and separating the liquid portion into a protein portion and a water soluble solids portion, wherein the protein portion defines a high protein meal including at least 40 wt % protein on a dry basis.

In another embodiment, a method for producing a high protein meal from a whole stillage byproduct produced from a biochemical process is disclosed that includes separating the whole stillage byproduct into an initial insoluble solids portion and an initial liquid portion, which includes protein, and milling at least a portion of the initial insoluble solids portion and separating the milled insoluble solids portion into another liquid portion, which includes protein, and another insoluble solids portion. Then, at least a portion of the other liquid portion is combined with the initial liquid portion to define a liquid portion, which includes protein, and the liquid portion is separated into a protein portion and a water soluble solids portion, wherein the protein portion defines a high protein meal including at least 40 wt % protein on a dry basis.

In another embodiment, a method for producing a high protein meal from a whole stillage byproduct produced from a biochemical process is disclosed that includes separating the whole stillage byproduct into an initial insoluble solids portion and an initial liquid portion, which includes protein, and milling at least a portion of the initial insoluble solids portion and separating the milled insoluble solids portion into another liquid portion, which includes protein, and insoluble solids portion. Then, the other liquid portion is combined with the whole stillage byproduct, and the liquid portion is separated into a protein portion and a water soluble solids portion, wherein the protein portion is not subsequently subjected to an evaporator and defines a high protein meal including at least 40 wt % protein on a dry basis.

In yet another embodiment, a system for producing a high protein meal from a whole stillage byproduct produced from a biochemical process is disclosed that includes a first apparatus that receives a whole stillage byproduct, wherein the first apparatus separates the whole stillage byproduct into an insoluble solids portion and a liquid portion, which includes protein, and a second apparatus that is situated after the first apparatus and that receives the liquid portion from the first apparatus, wherein the second apparatus separates the liquid portion into a protein portion and a water soluble solids portion. The system further includes at least one of a dewatering device or a dryer that is situated after the second apparatus and that produces a high protein meal that includes at least 40 wt% protein on a dry basis, and at least one milling device situated prior to the first apparatus to grind at least a portion of the whole stillage byproduct that is received by the first apparatus and/or situated after the first apparatus to grind the insoluble solids portion.

### Brief Description of the Drawings

The accompanying drawings, which are incorporated in and constitute a part of this specification, illustrate embodiments of the invention and, together with the general description of the invention given above, and the detailed description given below, serve to explain the principles of the invention. Similar reference numerals are used to indicate similar features throughout the various figures of the drawings.
FIG. 1 is a flow diagram of a typical dry grind alcohol production process;
FIG. 2 is a flow diagram of a method and system for producing a high protein meal from a whole stillage byproduct produced via a corn dry-milling process for making ethanol in accordance with an embodiment of the invention; and
FIG. 3 is a flow diagram of a method and system for producing a high protein meal from a whole stillage byproduct produced via a corn dry-milling process for making ethanol in accordance with another embodiment of the invention.

### Detailed Description of Specific Embodiments

The present invention is directed to a method and system for producing a high protein meal from a whole stillage byproduct produced in a corn dry-milling process for making ethanol, which may utilize one or more back end milling options.

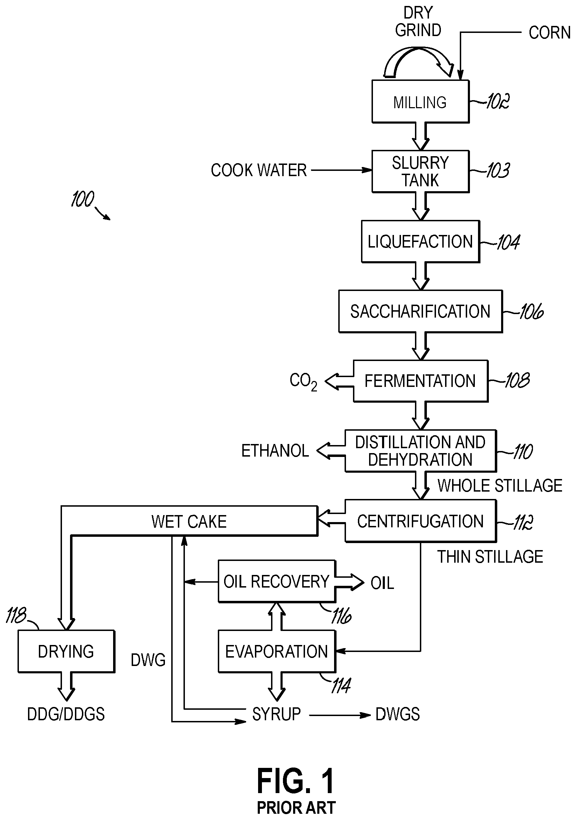

Fig. 1 shows a flow diagram of a typical dry grind alcohol (e.g., ethanol) production process 100. Although virtually any type and quality of grain, such as but not limited to sorghum, wheat, triticale, barley, rye, tapioca, cassava, potato, and other grains can be used to produce ethanol, for example, the feedstock for this process is typically corn referred to as "No. 2 Yellow Dent Corn." Also, as a general reference point, the dry grind method 100 can be divided into a front end and a back end. The part of the method 100 that occurs prior to distillation 110 is considered the "front end," and the part of the method 100 that occurs after distillation 110 is considered the "back end." To that end, the front end of the dry grind process 100 begins with a milling step 102 in which dried whole corn kernels can be passed through hammer mills for grinding/milling into meal or a fine powder. Other milling devices such as roller mills or pin mills can also be utilized in the milling step 102. The screen openings in the hammer mills or similar devices typically are of a size 6/64 to 9/64 inch, or about 2.38 mm to 3.57 mm, but some plants can operate at less than or greater than these screen sizes. The resulting particle distribution yields a very widely spread, bell type curve, which includes particle sizes as small as 45 microns and as large as 2 mm to 3 mm. The majority of the particles generally are in the range of 500 to 1200 microns, which is the "peak" of the bell curve.

After the milling step 102, the ground meal is mixed with cook water to create a slurry at the slurry tank 103 and a commercial enzyme called alpha-amylase is typically added (not shown). Creating the slurry at the slurry tank 103 is followed by a liquefaction step 104 whereat the pH is adjusted to about 4.8 to 5.8 and the temperature maintained between about 50°C to 105°C so as to convert the insoluble starch in the slurry to soluble starch. The stream after the liquefaction step 104 has about 30% dry solids (DS) content, but can range from about 29-36%, with all the components contained in the corn kernels, including starch/sugars, protein, fiber, starch, germ, grit, oil, and salts, for example. Higher solids are achievable, but this requires extensive alpha amylase enzyme to rapidly breakdown the viscosity in the initial liquefaction step. There generally are several types of solids in the liquefaction stream: fiber, germ, and grit.

Liquefaction 104 may be followed by separate saccharification and fermentation steps, 106 and 108, respectively, although in most commercial dry grind ethanol processes, saccharification and fermentation can occur simultaneously. This single step is referred to in the industry as "Simultaneous Saccharification and Fermentation" (SSF). Both saccharification and SSF can take as long as about 50 to 60 hours. Fermentation converts the sugar to alcohol. In particular, glucoamylase is typically added to the fermentation step to facilitate the breakdown of the starches and larger polysaccharides into monomers or single sugar molecules that the yeast can convert to ethanol (or other similar alcohols) while also producing carbon dioxide. In addition to glucoamylase, other enzymes can be added to the fermentation step (as well as before or after fermentation), such as but not limited to phytase, protease, cellulase, hemicellulase, xylanase, gluconase, and the like to further enhance protein and/or oil recovery. Yeast from the fermentation process generally pass through to the distillation (and dehydration) step 110. Yeast can optionally be recycled in a yeast recycling step (not shown) either during the fermentation process or at the very end of the fermentation process. Subsequent to the fermentation step 108 is the distillation (and dehydration) step 110, which utilizes a still to recover the alcohol.

Finally, a centrifugation step 112 involves centrifuging the residuals, i.e., "whole stillage", which includes non-fermentable components such as protein, oil, ash, minerals, and yeast yielded from the distillation and dehydration step 110, in order to separate the insoluble solids ("wet cake") from the liquid ("thin stillage"). The liquid from the centrifuge contains about 5% to 12% DS. The "wet cake" includes fiber, of which there generally are three types: (1) pericarp, with average particle sizes typically about 1 mm to 3 mm; (2) tipcap, with average particle sizes about 500 micron; (3) and fine fiber, with average particle sizes of about 250 microns. There may also be proteins and yeast bodies (inactive or lysed yeast), with a particle size of about 45 microns to about 300 microns. The fiber and other fractions may contain bound protein that is chemically and or physically attached to the fiber and other fraction.

The thin stillage typically enters evaporators in an evaporation step 114 in order to boil or flash away moisture, leaving a thick syrup which contains the soluble (dissolved) solids (mainly protein and starches/sugars) from the fermentation (25 to 40% dry solids) along with residual oil and fine fiber. The concentrated slurry can be sent to a centrifuge to separate the oil from the syrup in an oil recovery step 116. The oil can be sold as a separate high value product. The oil yield is normally about 0.7 lb/bu of corn with elevated free fatty acids content compared to traditional wet mill corn oil. This oil yield recovers only about 1/3 of the oil in the corn, with part of the oil passing with the syrup stream and the remainder being lost with the fiber/wet cake stream. About one-half of the oil inside the corn kernel remains inside the germ after the distillation step 110, which cannot be separated in the typical dry grind process using centrifuges as the oil is bound, not free. The free fatty acids content, which is created when the oil is heated and exposed to oxygen throughout the front and back-end process, reduces the value of the oil. The (de-oil) centrifuge only removes less than 50% because the protein and oil make an emulsion, which cannot be satisfactorily separated without the use of chemicals or added mechanical separation unit operations.

The syrup, which has more than 10% oil, can be mixed with the centrifuged wet cake, and the mixture may be sold to beef and dairy feedlots as Distillers Wet Grain with Solubles (DWGS). Alternatively, the wet cake and concentrated syrup mixture may be dried in a drying step 118 and sold as Distillers Dried Grain with Solubles (DDGS) to dairy and beef feedlots. This DDGS has all the corn and yeast protein and about 67% of the oil in the starting corn material. But the value of DDGS is low due to the high percentage of fiber, and in some cases the oil is a hindrance to animal digestion and lactating cow milk quality.

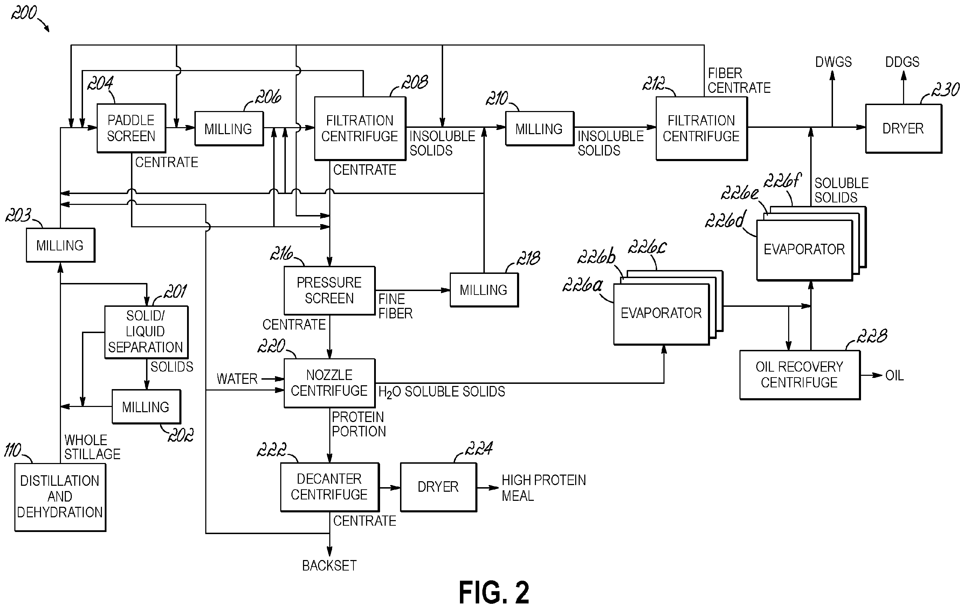

In accordance now with the present invention, Fig. 2 shows an embodiment of a method and system for producing a high protein meal, collectively numeral 200, from a whole stillage byproduct such as produced in a typical corn dry-milling process 100 like that just described in Fig. 1. Again, the whole stillage byproduct contains a slurry of soluble and insoluble solids, i.e., the spent grains from distillation and dehydration step 110, which includes protein, fiber, oil, yeast bodies, nucleotides, ash, minerals, and sugars that are processed in accordance with embodiments of this invention to produce a high protein meal that can be sold, e.g., as pig and chicken feed, at a higher cost per ton than typical DDGS or DWGS. In one embodiment, the resulting high protein meal includes at least 40 wt% protein on a dry basis as compared to a protein content of about 29% typically found in DDGS. The protein content in the resulting high protein meal can include grain (e.g., corn) protein as well as yeast protein.

With continuing reference to Fig. 2, in one example, a portion of the whole stillage byproduct can be piped from the corn dry mill distillation and dehydration step 110 and subjected to an optional milling step 202. Prior to the optional milling step 202, an optional solid/liquid separation step 201 can be utilized to separate solids and liquids, such as via particle size, from the portion of the whole stillage, with the separated solids/insoluble solids portion being sent to the optional milling step 202. The separated liquid portion then can be joined/rejoined with the milled insoluble solids portion after the optional milling step 202. The optional solid/liquid separation step 201 can involve the use of a paddle screen, pressure screen, and the like. The optional milling step 202 can involve the use of a hammer mill, roller mill, pin mill, impact mill, flaking mill, elution mill, colloidal mill, Bauer mill, Supraton, turbo mill, or the like, either in series or parallel, to grind the whole stillage byproduct to particle sizes less than about 800 microns or, in another example, less than about 500 microns. In another example, the resulting particle sizes are from about 200 microns to about 400 microns. In another example, the resulting particle sizes are from about 50 micron to about 300 micron. Other particle sizes, larger and smaller are possible. The milling or grinding helps break up the bonds between the fiber, as well as any remaining protein, starch, and germ and allows for the release of oil therefrom to define free oil and/or the release of protein therefrom to define free protein. The resulting and now initially ground portion of whole stillage byproduct then may be returned to the stream from which it was pulled, as is shown in Fig. 2, which is the stream from the corn dry mill distillation and dehydration step 110 and then optionally subjected to milling step 203, as discussed below.

With continuing reference to Fig. 2, the whole stillage byproduct, which may include at least a portion of initially ground whole stillage byproduct from milling step 202, can be received from the corn dry mill distillation and dehydration step 110 and subjected to optional milling step 203. The optional milling step 203 here can involve use of a hammer mill, roller mill, pin mill, impact mill, flaking mill, elution mill, colloidal mill, Bauer mill, Supraton, turbo mill, or the like, either in series or parallel, to grind the whole stillage byproduct to particle sizes less than about 800 micron or, in another example, less than about 500 microns. In another example, the resulting particle sizes are from about 200 microns to about 400 microns. In another example, the resulting particle sizes are from about 50 microns to about 300 microns. Other particle sizes, larger and smaller are possible. The milling/grinding helps break up the bonds between the fiber, as well as any remaining protein, starch, and germ and allows for the release of oil therefrom to define free oil and/or release of protein therefrom to define free protein.

The whole stillage byproduct, which may be ground/milled, then may be sent from optional milling step 203 and subjected to an optional paddle screen 204. The optional paddle screen 204 is situated before a filtration centrifuge 208, which is further discussed below, so as to aid in separation of the insoluble solids portion (fiber) from the thin stillage portion (centrate) by initially filtering out desirable amounts of water and protein, such as corn and yeast protein, and, incidentally, small fiber fines from the whole stillage byproduct. The optional paddle screen 204 can include multiple paddle screens, either in series or parallel. This initial screening can help reduce the resulting load on the subsequent filtration centrifuge 208. To filter the whole stillage byproduct, the optional paddle screen 204 can include screen openings of no greater than about 400 microns. In another example, the paddle screen 204 can include openings therein of no greater than about 250 microns. In yet another example, the openings therein are no greater than about 150 microns. In yet another example, the openings therein are no greater than about 50 microns. Other sizes, larger and smaller are possible. It should be understood that these values are exemplary and that those of ordinary skill in the art will recognize how to determine the size of the openings to achieve the desired filtration. In one example, the optional paddle screen 204 is a standard type paddle screen as is known in the art. One such suitable paddle screen 204 is the FQ-PS32 available from Fluid-Quip, Inc. of Springfield, Ohio. It should be understood that the optional paddle screen 204 may be replaced with other types of pre-concentration devices, e.g., a standard pressure screen or conic centrifuge, which can perform the desired filtration or pre-concentration function. One such suitable pressure screen is the PS-Triple available from Fluid-Quip, Inc. of Springfield, Ohio.

The resulting insoluble solids portion can be sent from the optional paddle screen 204 and subjected to optional milling step 206. The optional milling step 206 can involve use of a hammer mill, roller mill, pin mill, impact mill, flaking mill, elution mill, colloidal mill, Bauer mill, Supraton, turbo mill, or the like, either in series or parallel, to grind the insoluble solids portion to particle sizes less than about 800 microns or, in another example, less than about 500 microns. In another example, the resulting particle sizes are from about 200 microns to about 400 microns. In another example, the resulting particle sizes are from about 50 microns to about 300 microns. Other particle sizes, larger and smaller are possible. The milling or grinding helps break up the bonds between the fiber, as well as any remaining protein, starch, and germ and allows for the release of oil therefrom to define free oil and/or release of protein therefrom to define free protein. The resulting liquid portion or centrate from the paddle screen 204 eventually joins with the liquid portion or centrate from the filtration centrifuge 208, as will be discussed in greater detail below. In one example, at least a portion of the resulting centrate from the optional paddle screen 204 can be returned to meet up with the ground insoluble solids after optional milling step 206 and sent to the filtration centrifuge 208 for further processing.

In one example, the resulting insoluble solids portion from the optional milling step 206 can be piped to the filtration centrifuge 208. In another example, if the optional milling step 203, the optional paddle screen 204, and the optional milling step 206 are not present, the whole stillage from the distillation and dehydration step 110 can be sent directly to the filtration centrifuge 208. At the filtration centrifuge 208, the whole stillage byproduct or wet cake is separated into the insoluble solids portion, which includes fiber, and the thin stillage portion (centrate), which includes amino acids, protein, free oil, etc. The filtration centrifuge 208 may be configured to perform both the initial filtering (sometimes referred to as a pre-concentration) of the whole stillage byproduct and washing of the fiber so as to clean the fiber and remove the amino acids, protein, free oil, yeast, and other components that remain associated with the fiber after the initial filtration or pre-concentration. The washing of the insoluble solids portion may include a washing cycle, wherein the insoluble solids portion is mixed and rinsed in wash water or other centrate streams from the process, followed by a de-watering cycle, wherein the wash water or other centrate stream are separated from the insoluble solids. The washing of the fiber may include multiple rinsing/de-watering cycles. Additionally, a counter current washing technique may be employed to save wash water usage. After washing the insoluble solids, but before the insoluble solids exit the centrifuge, the insoluble solids portion may go through an enhanced de-watering stage, a compaction stage, and/or an air-dry stage to further de-water or dry the fiber. This may reduce the dryer capacity or eliminate the dryer altogether. One such suitable filtration centrifuge is described in Lee et al., U.S. Patent No. 8,813,973 entitled "Apparatus and Method for Filtering a Material from a Liquid Medium", the contents of which are expressly incorporated by reference herein in its entirety.

Eventually, the washed and filtered insoluble solids portion exits the filtration centrifuge 208 and can be subjected to an optional milling step 210 so that the insoluble solids portion can be further processed, as discussed further below. The optional milling step 210 involves use of a hammer mill, roller mill, pin mill, impact mill, flaking mill, elution mill, colloidal mill, Bauer mill, Supraton, turbo mill, or the like, either in series or parallel, to further grind the insoluble solids portion to particle sizes less than about 800 microns or, in another example, less than about 500 microns. In another example, the resulting particle sizes are from about 200 microns to about 400 microns. In another example, the resulting particle sizes are from about 50 microns to about 300 microns. Other particle sizes, larger and smaller are possible. The milling/grinding helps break up the bonds between the fiber, as well as any remaining protein, starch, and germ and allows for the release of oil therefrom to define free oil and/or the release of protein therefrom to define free protein. Moreover, any separated out portion of liquid slurry from the insoluble solids portion, e.g., water, amino acids, nucleotides, protein, free oil, yeast bodies, ash, minerals, organic acids, wash water, etc., which occurs via screening at the filtration centrifuge 208, can be collected to define the thin stillage (centrate) portion and can then be transported and further processed as described below. In one example, at least a portion of the centrate and/or wash water from filtration centrifuge 208 may optionally be piped back to the optional paddle screen 204 for further (re)processing. The filtration centrifuge 208 may provide the filtered material at a water concentration of between about 55% and about 85% water, which is a significant reduction compared to conventional filtration systems.

Although only one filtration centrifuge 208 is depicted, it should be understood that a plurality of filtration centrifuges may be situated in series or in parallel and utilized for separating the whole stillage byproduct into its insoluble solids portion and thin stillage/centrate portion. In one embodiment, one or more additional filtration centrifuges may be configured to pipe at least a portion of the centrate to a previous part of the method and system as discussed above. In an alternate embodiment, it is contemplated that any or all the filtration centrifuges can be replaced by a standard pressure screen, decanter centrifuge, paddle screen, desludging device, dewatering device (e.g., a dewatering press), or other like devices as are known in the art to separate the whole stillage byproduct into the insoluble solids portion and centrate portion then further processed as discussed below. One such suitable pressure screen is the PS-Triple available from Fluid-Quip, Inc. of Springfield, Ohio. One such suitable decanter centrifuge is the NX-944HS available from Alfa Laval of Lund, Sweden. And one such suitable paddle screen is the FQ-PS32 available from Fluid-Quip, Inc. of Springfield, Ohio.

With continuing referenced to Fig. 2, the resulting insoluble solids portion can be piped from the optional milling step 210 and subjected to another filtration centrifuge 212. The filtration centrifuge 212 may be configured to perform both an additional filtering of the insoluble solids portion and washing of the fiber so as to clean the fiber and remove additional amino acids, protein, free oil, and other components that still remain associated with the fiber. With respect to the filtration centrifuge 212, the washing of the insoluble solids portion may include a washing cycle, wherein the insoluble solids portion is mixed and rinsed in wash water, followed by a de-watering cycle, wherein the wash water is separated from the insoluble solids. The washing of the fiber may include multiple rinsing/de-watering cycles. Additionally, a counter current washing technique may be employed to save wash water usage. After washing the insoluble solids, but before the insoluble solids exit the centrifuge, the insoluble solids portion may go through an enhanced de-watering stage, a compaction stage, and/or an air-dry stage to further de-water or dry the fiber. This may further reduce the dryer capacity or eliminate the dryer altogether. The filtration centrifuge 212 may provide the filtered material at a water concentration of between about 55% and about 75% water, which is a significant reduction compared to conventional filtration systems. One such suitable filtration centrifuge is described in Lee et al., U.S. Patent No. 8,813,973 entitled "Apparatus and Method for Filtering a Material from a Liquid Medium", the contents of which are expressly incorporated by reference herein in its entirety.

Eventually, the washed and filtered insoluble solids portion exits the filtration centrifuge 212 so that the insoluble solids can be further processed, as discussed further below, to result in a desired product, such as distillers wet grain with solubles (DWGS), or distillers dry grain with solubles (DDGS), or distillers dry grain (DDG). In one example, the insoluble solids can be transported to a remote site for further processing. Moreover, any separated out portion of liquid slurry from the insoluble solids portion, e.g., water, amino acids, nucleotides, protein, free oil, yeast, wash water, etc., which occurs via screening at filtration centrifuge 212, can be collected to define a fiber centrate. At least a portion of the fiber centrate and/or wash water may optionally be piped to another part of the method or system for further processing. In one embodiment, at least a portion of the fiber centrate and/or wash water may be sent back to the optional paddle screen 204, optional milling step 206, and/or optional milling step 210. In another embodiment, at least a portion of the fiber centrate and/or wash water may be sent to the optional pressure screen 216 along with the centrate from the filtration centrifuge 208 and optional paddle screen 204, as shown and discussed further below.

Here again, although only one filtration centrifuge 212 is depicted, it should be understood that a plurality of filtration centrifuges may be situated in series or in parallel and utilized for separating the whole stillage byproduct into its insoluble solids portion and fiber centrate portion. In one embodiment, one or more additional filtration centrifuges may be configured to send at least a portion of the fiber centrate to a previous part of the method or corresponding system as discussed above. In an alternate embodiment, it is contemplated that any or all the filtration centrifuges can be replaced by a standard pressure screen, decanter centrifuge, paddle screen, desludging device, dewatering device (e.g., a dewatering press), or other like devices as are known in the art to separate the whole stillage byproduct into the insoluble solids portion and thin stillage/centrate portion then further processed as discussed below. One such suitable pressure screen is the PS-Triple available from Fluid-Quip, Inc. of Springfield, Ohio. One such suitable decanter centrifuge is the NX-944HS available from Alfa Laval of Lund, Sweden. And one such suitable paddle screen is the FQ-PS32 available from Fluid-Quip, Inc. of Springfield, Ohio.

With continuing reference to Fig. 2, at least a portion of the liquid portion or centrate from the filtration centrifuges 208, 212 may be combined with the liquid portion or centrate from the optional paddle screen 204, and the resulting liquid portion/centrate may be subjected to an optional standard pressure screen 216, as is known in the art, to further aid in separation of any fine fiber from the centrate. As indicated above, fiber having a size less than that of the screen of the filtration centrifuges 208, 212, and/or optional paddle screen 204 may pass through and to subsequent steps of the dry mill process. At the pressure screen 216, the fine fiber can be separated from the centrate and sent to an optional milling step 218. One such suitable pressure screen 216 is the PS-Triple available from Fluid-Quip, Inc. of Springfield, Ohio. In an alternate embodiment, the optional pressure screen 216 may be replaced with a standard paddle screen or decanter centrifuge, as are mentioned above, or other like device, to aid in separation of the fine fiber from the thin stillage/centrate portion.

The optional milling step 218 involves use of a hammer mill, roller mill, pin mill, impact mill, flaking mill, elution mill, colloidal mill, Bauer mill, Supraton, turbo mill, or the like, either in series or parallel, to grind the fine fiber to particle sizes less than about 800 microns or, in another example, less than about 500 microns. In another example, the resulting particle sizes are from about 200 microns to about 400 microns. In another example, the resulting particle sizes are from about 50 microns to about 300 microns. Other particle sizes larger and smaller are possible. At least a portion of the fine fiber, which may be optionally ground, may be piped back to the optional paddle screen 204 and/or the filtration centrifuge 208. In a further embodiment, at least a portion of the fine fiber can be piped to the optional milling step 210. After the optional pressure screen 216, the underflow or remaining thin stillage/centrate portion can then be piped and subjected to a centrifuge 220, as is known in the art.

The centrifuge 220 can be provided with washing capabilities so that water, along with the centrate portion, can be supplied to the centrifuge 220. The additional water, which may be fresh water, allows for easier separation of the thin stillage/centrate into its protein portion and water-soluble solids portion. The protein portion, which can include corn and yeast protein, separates from the water-soluble solids portion and is removed as the underflow whereas the lighter water-soluble solids portion, which includes oil and other organic compounds, such as lactic acid, acetaldehyde, glycerol, and nucleotides, from the upstream fermentation process, can be removed as the overflow. An optional additional centrate portion from decanter centrifuge 222, as discussed below, also may be provided to the centrifuge 220 here. One suitable centrifuge 220 is the FQC-950 available from Fluid-Quip, Inc. of Springfield, Ohio, which is a nozzle centrifuge. In an alternate embodiment, the centrifuge 220 can be replaced with a standard cyclone apparatus or other like device, as are known in the art, to separate the thin stillage portion into the underflow protein portion and overflow water soluble solids portion. One such suitable cyclone apparatus is the RM-12-688 available from Fluid-Quip, Inc. of Springfield, Ohio.

With further reference to Fig. 2, the underflow protein portion from the centrifuge 220 can be further piped and subjected to decanter centrifuge 222 to dewater the protein portion, which can include corn and yeast protein. The decanter centrifuge 222 is standard and known in the art. One such suitable decanter centrifuge 222 is the SG806 available from Alfa Laval of Lund, Sweden. Other like devices are contemplated. The separated liquid portion or centrate from the decanter centrifuge 222 may be recycled back, for example, as backset to the liquefaction step 104 or the fermentation step 108 for reuse in the dry mill process or used in further biochemical, algae, or applications. In another example, the centrate from the decanter centrifuge 222 may be recycled back to one or more of the optional paddle screen 204, centrifuge 220, or filtration centrifuge 212. The dewatered protein portion, which can include spent yeast, may be optionally dried, such as by being sent to a dryer 224, such as a rotary dryer, a spray dryer, a ring dryer, an air classifier dryer, or the like, as is known in the art. In an alternate embodiment, the dewatered protein portion can be subjected to vacuum filtration, a crystallizer, or other drying methods, as are known in the art. The dewatered (and optionally dried) protein product defines a high protein meal that includes at least 40 wt% protein on a dry basis and which may be sold as pig or chicken feed, for example. In another embodiment, the high protein meal includes at least 45 wt% protein on a dry basis. In another embodiment, the high protein meal includes at least 50 wt% protein on a dry basis. In yet another embodiment, the high protein meal includes at least 60 wt% protein on a dry basis. In still another embodiment, the high protein meal includes about 56 wt% protein on a dry basis. The protein in the high protein meal includes grain (e.g., corn) protein and may also contain yeast protein and/or yeast bodies. The amount of yeast protein in the protein of the high protein meal can vary and, in one example, can include less than 5% of the total protein content. In another example, the yeast protein can be from 0.1% to 5% of the total protein content. In another example, the yeast protein can include at least 5% total protein content. In another example, the yeast protein can include from about 5% to 40% of the total protein content. And in another example, the yeast protein can include 40% or more of the total protein content. The yeast protein includes part of the spent yeast bodies. The resulting high protein meal may be sold at a much higher cost per ton than DDGS or DWGS.

With continuing reference to Fig. 2, the overflow water-soluble solids portion, which includes oil as well as minerals and soluble proteins, is piped from the centrifuge 220 and can be subjected, for example, to a set of three evaporators 226a, 226b, and 226c, as are known in the art, to begin separating the soluble solids from the water-soluble solids portion. In one embodiment, at least a portion of the water-soluble solids portion may be recycled back or combined with the centrate from the decanter centrifuge 222 and recycled back, for example, as backset to the liquefaction step 104 or the fermentation step 108 for reuse in the dry mill process. Returning again to the evaporators, the evaporators 226a-c evaporate the liquid portion of the water-soluble solids portion. Thereafter, the water-soluble solids portion can be piped and subjected to an optional oil recovery centrifuge 228, as is known in the art, so that oil can be removed therefrom. One such suitable oil recovery centrifuge 228 is the ORPX 617 available from Alfa Laval of Lund, Sweden. In one example, the final recovered oil product can include between about 40 wt% to about 60 wt% of the total corn oil in the corn. In comparison to typical oil recovery in a standard dry mill process, oil recovery centrifuge 228 can function at a higher capacity because the water-soluble solids portion, which is subjected to the oil recovery centrifuge 228, includes less liquid and less protein than normal.

The remainder of the water-soluble solids portion can be piped and subjected to another set of three evaporators 226d, 226e, and 226f whereat the liquid portion is further evaporated from the water-soluble solids portion to ultimately yield a soluble solids portion. While Fig. 2 shows the water-soluble solids portion being subjected to two sets of three evaporators, 226a-c and 226d-f, it should be understood that the number of evaporators and sets thereof can be varied, i.e., can be more or less, from that shown depending on the particular application and result desired.

In one example, the resulting soluble solids portion may be combined with the insoluble solids portion received from the filtration centrifuge 212 to provide DWGS. In another example, the DWGS may be dried by a drier 262, as is known in the art, to provide DDGS. In yet another example, the soluble solids portion may be used as a natural fertilizer. In yet another example, the soluble solids portion may be used as a feed source for a fermentation process or an anerobic digestion system or utilized in a biologic and/or chemical system. Accordingly, in this dry mill process, neither the DDGS nor DWGS receive the typical concentrated syrup from the evaporators 260a-f. While this change from the typical dry mill process 100 results in a lower crude protein content in the DDGS and DWGS, this decrease is insubstantial, particularly, when the economic advantages of producing the high protein meal are realized. And, despite the potential lower protein content, the DDGS and DWGS may still be sold to beef and dairy feedlots as cattle feed as well as used in other downstream applications, such as cellulosic feed conversion systems that convert the fiber to fermentable sugars and the like.

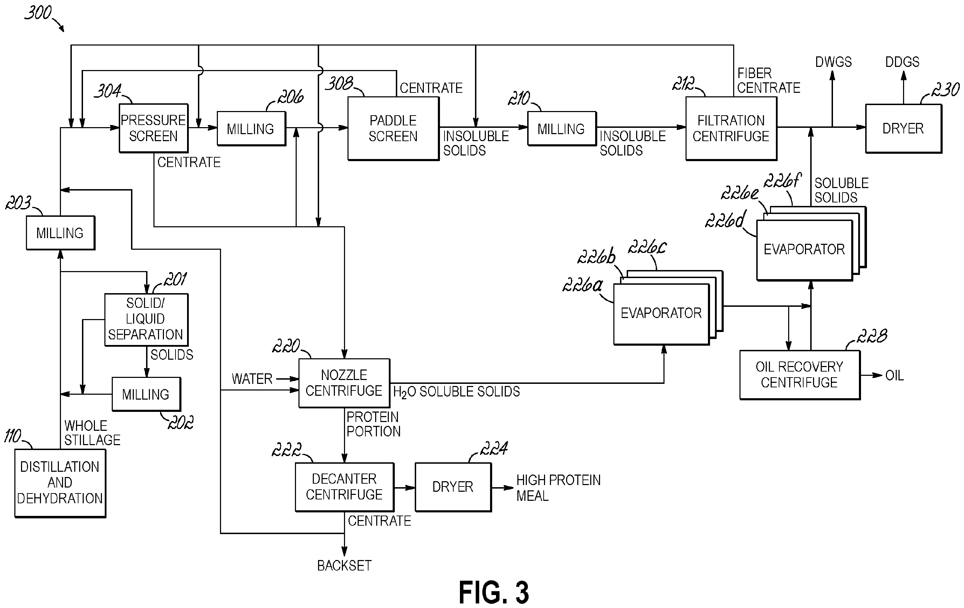

With reference now to Fig. 3 and in accordance with another embodiment of the invention, a method and system for producing a high protein meal, collectively numeral 300, from the whole stillage byproduct produced in a typical corn dry-milling process 100, like that described in Fig. 1, is shown. The embodiment of Fig. 3 has many similarities in comparison to the embodiment of Fig. 2. Certain reference numerals used in Fig. 2 are used here to represent like devices and/or steps in the method and system 300. The variations of the embodiment of Fig. 3 are discussed hereinbelow.

Initially, as shown in Fig. 3, the optional paddle screen 204 and the filtration centrifuge 208 of Fig. 2 have been replaced with a pressure screen 304 and a paddle screen 308, respectively. Here, the pressure screen 304 is situated before paddle screen 308 so as to filter out a liquid portion including desirable amounts of water and protein and, incidentally, small fiber fines from the whole stillage byproduct, which aids in separation of the resulting whole stillage into an insoluble solids portion (fiber) and a liquid portion/centrate after the whole stillage byproduct is received at the paddle screen 308. This initial screening itself produces a thin stillage or centrate that can help reduce the resulting load on the subsequent paddle screen 308. To filter the whole stillage byproduct, the pressure screen 304 can include screen openings of no greater than about 500 microns. In another example, the pressure screen 304 can include openings therein of no greater than about 400 microns. In another example, the pressure screen 304 can include openings therein of no greater than about 300 microns. In yet another example, the openings therein are no greater than about 250 microns. In yet another example, the openings therein are no greater than about 150 microns. It should be understood that these values are exemplary and that those of ordinary skill in the art will recognize how to determine the size of the openings to achieve the desired filtration. One such suitable pressure screen 304 is the PS-Triple available from Fluid-Quip, Inc. of Springfield, Ohio. While the pressure screen device 304 is the preferred device at this location in this embodiment, it should be understood that the pressure screen 304 may be replaced with other types of pre-concentration devices, e.g., a standard paddle screen or conic centrifuge, which can perform the desired filtration or pre-concentration function. One such suitable paddle screen is the FQ-PS32 available from Fluid-Quip, Inc. of Springfield, Ohio. And although only one pressure screen 304 is depicted, it should be understood that a plurality may be situated in series or in parallel and utilized for separating the whole stillage into a centrate portion and insoluble solids portion.

Like the embodiment of Fig. 2, the resulting whole stillage byproduct or insoluble solids portion can be piped from the pressure screen 304 and subjected to optional milling step 206. The resulting centrate/liquid portion from the pressure screen 304 may be sent directly to the centrifuge 220. And in one example, at least a portion of the resulting centrate from the pressure screen 304 can be returned to meet up with the ground insoluble solids after optional milling step 206 and sent to the paddle screen 308 for further processing.

Whether the milling step 206 is present or not, the insoluble solids eventually are sent to the paddle screen 308 whereat a liquid portion or centrate, which includes amino acids, nucleotides, protein, yeast, free oil, etc., can be separated from the insoluble solids portion, which includes fiber. To filter the insoluble solids, the paddle screen 308 can include screen openings of no greater than about 400 microns. In another example, the paddle screen 308 can include openings therein of no greater than about 250 microns. In yet another example, the openings therein are no greater than about 150 microns. In yet another example, the openings therein are no greater than about 50 microns. Other sizes, larger and smaller are possible. It should be understood that these values are exemplary and that those of ordinary skill in the art will recognize how to determine the size of the openings to achieve the desired filtration. In one example, the paddle screen 308 is a standard type paddle screen as is known in the art. One such suitable paddle screen 308 is the FQ-PS32 available from Fluid-Quip, Inc. of Springfield, Ohio. The centrate or liquid portion from the paddle screen 308, e.g., water, amino acids, nucleotides, protein, yeast, free oil, etc., which occurs via screening at the paddle screen 308, can be piped back to be subjected to the pressure screen 304 again for further (re)processing, along with the whole stillage.

While the paddle screen device 308 is the preferred device at this location in this embodiment, it should be understood that the paddle screen 308 may be replaced with other types of pre-concentration devices, e.g., a standard pressure screen or conic centrifuge, which can perform the desired filtration or pre-concentration function. One such suitable pressure screen is the PS-Triple available from Fluid-Quip, Inc. of Springfield, Ohio. Although only one paddle screen 308 is depicted, it should be understood that a plurality may be situated in series or in parallel and utilized for separating the centrate portion from the insoluble solids portion.

With continuing reference to Fig. 3, the insoluble solids portion exits the paddle screen 308 and can be subjected to optional milling step 210 followed by the filtration centrifuge 212 so that the insoluble solids portion can be further processed, as already discussed above. The separated portion of liquid slurry from the insoluble solids portion, e.g., water, amino acids, nucleotides, protein, yeast, free oil, wash water, etc., which occurs via screening at filtration centrifuge 212, defines the fiber centrate. Here, at least a portion of the fiber centrate and/or wash water may optionally be piped to another part of the method or system for further processing. In one embodiment, at least a portion of the fiber centrate and/or wash water may be sent back to the pressure screen 304, optional milling step 206, and/or optional milling step 210. In another embodiment, at least a portion of the fiber centrate and/or wash water may be sent to the centrifuge 220, such as by being joined up with the centrate from the pressure screen 304, as shown.

Although only one filtration centrifuge 212 is depicted, it should be understood that a plurality of filtration centrifuges may be situated in series or in parallel and utilized for separating centrate from the insoluble solids portion. In one embodiment, one or more additional filtration centrifuges may be configured to send at least a portion of fiber centrate to a previous part of the method or corresponding system as discussed above. In an alternate embodiment, it is contemplated that any or all of the filtration centrifuges can be replaced by a standard pressure screen, decanter centrifuge, paddle screen, desludging device, dewatering device (e.g., a dewatering press), or other like devices as are known in the art to separate the insoluble solids portion and centrate portion then further processed as discussed above. One such suitable pressure screen is the PS-Triple available from Fluid-Quip, Inc. of Springfield, Ohio. One such suitable decanter centrifuge is the NX-944HS available from Alfa Laval of Lund, Sweden. And one such suitable paddle screen is the FQ-PS32 available from Fluid-Quip, Inc. of Springfield, Ohio.

The liquid portion or centrate from the pressure screen 304, optionally combined with the liquid portion or fiber centrate from the filtration centrifuge 212, can be sent directly to the centrifuge 220, and the stream processed, as discussed above, by being subjected to the decanter centrifuge 222 to produce a protein product that defines a high protein meal that includes at least 40 wt% protein on a dry basis and which may be sold as pig or chicken feed, for example. In another embodiment, the high protein meal includes at least 45 wt% protein on a dry basis. In another embodiment, the high protein meal includes at least 50 wt% protein on a dry basis. In yet another embodiment, the high protein meal includes at least 60 wt% protein on a dry basis. In still another embodiment, the high protein meal includes about 56 wt% protein on a dry basis. The protein in the high protein meal includes grain (e.g., corn) protein and may also contain yeast protein. The amount of yeast protein in the protein of the high protein meal can vary and, in one example, can include less than 5% of the total protein content. In another example, the yeast protein can be from 0.1% to 5% of the total protein content. In another example, the yeast protein can include at least 5% total protein content. In another example, the yeast protein can include from about 5% to 40% of the total protein content. And in another example, the yeast protein can include 40% or more of the total protein content. The yeast protein includes part of the spent yeast bodies. The resulting high protein meal may be sold at a much higher cost per ton than DDGS or DWGS. In one example, the centrate from the decanter centrifuge 222 may be recycled back to one or more of the pressure screen 304, paddle screen 308, or the filtration centrifuge 212. The remainder of method and system 300 is as discussed above with respect to the embodiment of Fig. 2.

While the present invention has been illustrated by the description of one or more embodiments thereof, and while the embodiments have been described in considerable detail, they are not intended to restrict or in any way limit the scope of the appended claims to such detail. The various features shown and described herein may be used alone or in any combination. Additional advantages and modifications will readily appear to those skilled in the art. The invention in its broader aspects is therefore not limited to the specific details, representative apparatus and methods and illustrative examples shown and described. Accordingly, departures may be made from such details without departing from the scope or spirit of Applicant's general inventive concept.

## Claims

1. A method for producing a high protein meal from a whole stillage byproduct produced from a biochemical process comprising:
milling at least a portion of a whole stillage byproduct;
separating the whole stillage byproduct, which includes the milled portion, into an insoluble solids portion and a liquid portion, which includes protein; and
separating the liquid portion into a protein portion and a water soluble solids portion, wherein the protein portion defines a high protein meal including at least 40 wt % protein on a dry basis.

2. The method of claim 1 further comprising drying the protein portion to provide a protein portion that defines a high protein meal including at least 40 wt % protein on a dry basis; or further comprising dewatering the protein portion and drying the dewatered protein portion to define a high protein meal including at least 40 wt % protein on a dry basis.

3. The method of claim 1 wherein separating the liquid portion comprises separating the liquid portion into only the protein portion and the water soluble solids portion;
or wherein separating the liquid portion comprises separating the liquid portion into only the protein portion and the water soluble solids portion and further comprising separating oil from the water soluble solids portion to provide an oil portion;
or wherein separating the liquid portion into a protein portion and a water soluble solids portion comprises, prior to any evaporation step, separating the liquid portion into a protein portion and a water soluble solids portion, wherein the protein portion is not subsequently subjected to an evaporator.

4. The method of claim 1 further including separating oil from the water soluble solids portion to provide an oil portion.

5. The method of claim 1 wherein the high protein meal includes at least 50 wt % protein on a dry basis; and/or wherein the protein of the high protein meal includes at least 5% yeast protein.

6. The method of claim 1 further comprising removing fine fiber from the liquid portion and milling the fine fiber portion; preferably wherein at least a portion of the milled fine fiber is combined with the insoluble solids portion and/or the whole stillage byproduct, which includes the milled portion.

7. The method of claim 1 further comprising milling the insoluble solids portion;
or further comprising milling the insoluble solids portion and separating the milled insoluble solids portion into another liquid portion, which includes protein, and another insoluble solids portion and further combining at least a portion of the other liquid portion with the whole stillage byproduct, which includes the milled portion, the liquid portion, or the insoluble solids portion, or combinations thereof.

8. The method of claim 1 wherein separating the whole stillage byproduct includes separating the whole stillage byproduct, which includes the milled portion, via a paddle screen, a pressure screen, a filtration centrifuge, or a dewatering device, into the insoluble solids portion and the liquid portion, which includes protein;
or wherein separating the whole stillage byproduct includes separating the whole stillage byproduct, which includes the milled portion, via a paddle screen or a pressure screen into the insoluble solids portion and the liquid portion, which includes protein, and further comprising milling the insoluble solids portion.

9. A method for producing a high protein meal from a whole stillage byproduct produced from a biochemical process comprising:
separating the whole stillage byproduct into an initial insoluble solids portion and an initial liquid portion, which includes protein;
milling at least a portion of the initial insoluble solids portion and separating the milled insoluble solids portion into another liquid portion, which includes protein, and another insoluble solids portion;
combining at least a portion of the other liquid portion with the initial liquid portion to define a liquid portion, which includes protein, and
separating the liquid portion into a protein portion and a water soluble solids portion, wherein the protein portion defines a high protein meal including at least 40 wt % protein on a dry basis.

10. The method of claim 9 wherein separating the whole stillage byproduct into an initial insoluble solids portion and an initial liquid portion, which includes protein, comprises separating, via a paddle screen or a filtration centrifuge, the whole stillage byproduct into an initial insoluble solids portion and an initial liquid portion;
and/or wherein separating the milled insoluble solids portion into another liquid portion comprises separating the milled insoluble solids portion, via a filtration centrifuge, into another liquid portion, which includes protein, and another insoluble solids portion.

11. A method for producing a high protein meal from a whole stillage byproduct produced from a biochemical process comprising:
separating the whole stillage byproduct into an initial insoluble solids portion and an initial liquid portion, which includes protein;
milling at least a portion of the initial insoluble solids portion and separating the milled insoluble solids portion into another liquid portion, which includes protein, and insoluble solids portion;
combining the other liquid portion with the whole stillage byproduct, and
separating the liquid portion into a protein portion and a water soluble solids portion, wherein the protein portion is not subsequently subjected to an evaporator and defines a high protein meal including at least 40 wt % protein on a dry basis.

12. The method of claim 11 wherein separating the whole stillage byproduct into an initial insoluble solids portion and an initial liquid portion, which includes protein, comprises separating, via a pressure screen, the whole stillage byproduct into an initial insoluble solids portion and an initial liquid portion; and/or wherein separating the milled insoluble solids portion into another liquid portion comprises separating the milled insoluble solids portion, via a paddle screen, into another liquid portion, which includes protein, and another insoluble solids portion.

13. The method of claims 9 or 11 wherein separating the liquid portion into a protein portion and a water soluble solids portion comprises prior to any evaporation step, separating the liquid portion into a protein portion and a water soluble solids portion, wherein the protein portion is not subsequently subjected to an evaporator and defines a high protein meal including at least 40 wt % protein on a dry basis.

14. A system for producing a high protein meal from a whole stillage byproduct produced from a biochemical process, the system comprising:
a first apparatus that receives a whole stillage byproduct, wherein the first apparatus separates the whole stillage byproduct into an insoluble solids portion and a liquid portion, which includes protein;
a second apparatus that is situated after the first apparatus and that receives the liquid portion from the first apparatus, wherein the second apparatus separates the liquid portion into a protein portion and a water soluble solids portion;
at least one of a dewatering device or a dryer that is situated after the second apparatus and that produces a high protein meal that includes at least 40 wt% protein on a dry basis; and
at least one milling device situated prior to the first apparatus to grind at least a portion of the whole stillage byproduct that is received by the first apparatus and/or situated after the first apparatus to grind the insoluble solids portion.

15. The system of claim 14 wherein the first apparatus is situated after a distillation column and receives the whole stillage byproduct produced via a grain dry-milling process, preferably wherein the first apparatus is selected from a filtration centrifuge, a pressure screen, or a paddle screen and the second apparatus is selected from a centrifuge or a cyclone apparatus;
and/or wherein the system further comprises:
a third apparatus that is situated between the first apparatus and the second apparatus and that receives the liquid portion and whereat fine fiber is separated from the liquid portion; and at least one additional milling device that is situated after the third apparatus to grind the fine fiber;
and/or wherein the second apparatus is situated prior to any evaporator;
and/or wherein the system further comprises an evaporator that is situated after the second apparatus and that receives the water soluble solids portion but does not receive the separated protein portion, wherein the evaporator separates soluble solids from the water soluble solids portion, via evaporation.
